# EUROPEAN PATENT APPLICATION

(11) **EP 0 634 470 A1**
(43) Date of publication of application: **18.01.1995**
(21) Application number: 94110768.2
(22) Date of filing: 11.07.1994
(51) Int. Cl.: C10J 3/46, C10J 3/54, C10J 3/56

(54) **Transport gasifier**

(30) Priority: 12.07.1993 US 90601
(71) Applicant: M. W. Kellogg Company, Houston Texas 77210-4557 (US)
(72) Inventor: Campbell, William Martin, Houston, Texas 77090 (US); Gbordzoe, Eusebius Anku, Houston, Texas 77084 (US); Henningsen, Gunnar Bagger, Sugar Land, Texas 77479 (US); Lin, Yung-Yi, Houston, Texas 77094 (US)
(74) Representative: Huber, Bernhard, Dipl.-Chem.

(57) **Abstract**

A transport reactor useful for the gasification of carbonaceous substrates and a gasification process are disclosed. The transport gasifier has a combustion zone for burning recirculated char particles with a substoichiometric oxygen supply, a feed injection zone for mixing a carbonaceous feed such as coal with the substoichiometric combustion products, a riser in which the coal is generally adiabatically devolatilized and gasified, a separation zone to disengage entrained particles from riser effluent, a solids holdup zone to receive the particles, and a transfer line for recirculating the particles from the holdup zone to the combustion zone. By introducing a coal feed into a gasification reaction zone downstream of a substoichiometric combustion reaction zone, volatile hydrocarbons contained in the coal can be conserved to increase the heating value of the coal gas produced. Also disclosed is a transport combustor for burning spent solids from the transport gasifier.

## Description

### Field of the Invention

The present invention relates to a transport fluid bed reactor useful for gasification of a carbonaceous feed for power generation, and more particularly the present invention relates to transport gasification wherein the carbonaceous feed is introduced to a gasification zone downstream from a substoichiometric combustion zone.

### Background of the Invention

The use of fluid bed coal gasification for power generation has increased in importance as petroleum reserves have declined, reliance on nuclear energy has diminished and coal reserves remain abundant. The art is currently in a state of rapid change as operating experience leads to improved performance. Part of this operating experience includes forty years of refining petroleum in fluidized catalytic cracking (FCC) reactors. Campbell, "Operating Experience with FBCs in the Petroleum Industry," Energy and Power Research Institute, May 3, 1988 describes FCC reactor technology and presents analogies to fluid bed reactors in power generation.

Fluid bed processes in general are based on an interaction of solid and gaseous phases to promote a chemical reaction. It is known that performance can be improved substantially by making the solids phase more accessible to the gas phase in terms of surface area available for reaction. However, solids size has generally been limited by separation technology needed to remove entrained particulates. Earliest systems used gas bubbled through a bed of particulates. The so-called "bubbling bed reactor" comprised a substantially continuous solids phase made up of relatively coarse sized particles (<5 cm) and a discontinuous gas phase having a low superficial velocity of about 0.9-1.5 m/sec. Due to the greater density of the solids phase, a relatively small amount of solids were carried over from the reactor.

The development of high efficiency cyclone separators improved solids separation and permitted the reaction operating regime to be extended beyond the bubbling bed through the turbulent region to a transport hydrodynamic regime. In the fast bed transport regime, particle size is generally less than about 1.5 cm with a superficial velocity of 4.5-6 m/sec. In the pneumatic transport regime, particle size can generally be less than 0.3 mm with a superficial velocity of as much as 12-18 m/sec. With finest particle size and highest velocity, the transport operating regime represents the current state of the art for fluid bed reactor design.

Transition to the transport regime has also improved process control due to enhanced mixing of the reaction medium. As a result, current transport reactors can operate at an elevated pressure--possibly up to about 4 MPa(g) (about 600 psig) to give higher thermal output per unit reactor cross-sectional area and greater output in the power cycle. A pressurized, transport mode fluid bed coal combustor is described in Campbell, "Development of a Transport Mode Pressurized Circulating Fluid Bed Combustor," Power Gen-88, December 7, 1988.

Process improvements have also been made on a macro scale to overcome impediments resulting from sulfur emission control. Since the presence of sulfur in fossil fuels such as coal poses a pollution problem, sulfur emissions have been efficiently controlled using an *in situ* particulate limestone sorbent. Added with the coal feed to the reactor, the limestone can absorb sulfur immediately upon release during gasification and/or the combustion process. The use of *in situ* limestone, however, undesirably limits the operating temperature of a reactor to avoid decomposing the salts formed by sulfur absorption. Consequently, a significant portion of the heat of combustion must be rapidly removed to avoid degradation of the sorbent.

Gasification, however, is significantly slower than ordinary combustion, and the reactivity of residual ungasified coal (char) becomes progressively reduced as conversion increases. Because the residual char can still be burned, a hybridized combustion cycle process called the integrated gasification combined cycle (IGCC) has been developed to combine front end partial gasification in a first reactor followed by combustion of the unconverted char in a second reactor. In the hybrid process, a marginal reduction of conversion in the gasification stage does not severely penalize the overall efficiency of the power cycle since the unconverted material from the gasifier is burned in the combustor for heat recovery. A hybrid design of a fluid bed reactor in power generation is described in O'Donnell, "An Advanced Concept in Pressurized Fluid Bed Combustion," American Society of Mechanical Engineers, 1991, which is hereby incorporated herein by reference.

Gasification of coal and other carbonaceous feeds is well known. Gasification reactors generally include a combustion zone wherein heat is produced to promote gasification in a gasification zone. Conventionally, the coal feed gives up volatile components immediately upon entrance into a high temperature reactor. Because these compounds are then rapidly burned in the combustion zone, the fuel gas produced by gasification of the less volatile coal components has a lower heating value than what is potentially achievable.

It would be advantageous to be able to increase the heating value of a fuel gas produced by coal gasification without adversely affecting the gasification process or environmental quality to obtain enhanced efficiency for fossil fuel-based energy extraction processes.

### Summary of the Invention

According to the present invention, a fluid bed gasification reactor has a combustion zone and a separate gasification zone wherein a carbonaceous material is gasified to produce a fuel gas. It has been discovered that the heating value of the fuel gas can be enhanced by introducing the carbonaceous feed into the gasification zone, instead of the combustion zone as in the prior art. In such a manner, combustion can be limited to the less volatile char, and combustion of volatile components in the feed material which have a higher heating value can be substantially avoided.

In one embodiment, the present invention provides a method for gasifying a carbonaceous substrate. As one step, a carbonaceous feed is introduced into a stream of substoichiometric combustion products, optionally with steam or water. As another step, the resulting mixture is passed through an essentially adiabatic riser under transport conditions to devolatilize and gasify the substrate. Finely divided particles are recovered from the gasification products to obtain a fuel gas essentially free of particulates. A primary portion of the recovered particles and a substoichiometric amount of reactive oxygen are supplied to a combustion zone to form the stream of substoichiometric combustion products.

The feed substrate can comprise coal or other carbonaceous, gasifiable material. The feed stream can contain sulfur sorbent particles such as limestone. The primary portion of the recovered particles recycled to the combustion zone preferably comprises from 10 to 250 times the mass flow rate of the substrate feed. Reactive oxygen supplied to the combustion zone preferably comprises less than about 5 percent of the stoichiometric amount relative to the carbon supplied thereto. The present method can comprise feeding a secondary portion of the recovered particles to a secondary combustion zone, preferably a transport combustor, and extracting heat from the secondary combustion products. The recovered particles can comprise char and sulfur sorbent particles or essentially inert particles with a deposition of carbon compounds thereon.

As another embodiment, the present invention provides a coal gasification method. Coal and sulfur sorbent particles, optionally with steam, are introduced into a high velocity stream of substoichiometric combustion products containing carbon monoxide (CO) and essentially free of molecular oxygen. The resulting mixture is passed through an essentially adiabatic riser in a high velocity stream under transport conditions to devolatilize and gasify the coal particles to form residual char particles, and to absorb sulfur compounds onto the sorbent particles. The char and sorbent particles are recovered from the gasification products to obtain a fuel gas essentially free of particulates. Oxygen and a first portion of the recovered char and sorbent particles are supplied to a substoichiometric combustion zone. The first portion of the recovered particles comprises a mass flow amounting to from about 10 to about 250 times the mass flow rate of the feed. The oxygen supply comprises less than 5 percent of the stoichiometric amount for complete combustion of the carbon in the first portion of the char particles.

In a preferred embodiment, the present invention comprises a hybrid gasification method further including the steps of: feeding a second portion of the recovered particles to a transport combustor including a transport mixing zone supplied with recirculated particles and a substoichiometric supply of oxygen; passing the resulting mixture through a transport combustion riser at a high velocity, preferably at transport conditions, and introducing an additional supply of oxygen in one or more stages into the transport combustion riser for substantially complete combustion therein; recovering finely divided particles from effluent from the transport combustion riser to obtain a flue gas essentially free of particulates; recirculating particles recovered from the transport combustion riser effluent to the transport mixing zone; discharging ash from the transport combustor; recovering heat from the flue gas; and recovering heat from the particles recovered from the transport combustion riser effluent. In addition, heat can be recovered from an external heat exchanger through which particles from the transport combustor are circulated in a controllable amount, and optionally from coils disposed in a combustor holdup vessel receiving the recovered particles from the transport combustion riser effluent.

In a further embodiment, the present invention provides an apparatus for transport gasification of a carbonaceous feed material such as coal. The apparatus comprises a combustion zone for burning combustible solids with a substoichiometric oxidant supply to form a stream of combustion products essentially free of reactive oxidant. A feed injection zone is provided adjacent a riser inlet for introducing a carbonaceous feed into the stream of combustion products. A riser is adapted to receive the mixture from the feed injection zone and includes an essentially adiabatic zone for devolatilization and gasification. A separation zone receives gasification products from the riser and recovers finely divided, combustible particles therefrom to form a fuel gas product essentially free of particulates. A solids holdup zone receives the recovered particles. A transfer line fluidizes and conveys particles from the holdup zone to the combustion zone. The gasifier includes a sufficient charge of the finely-divided, combustible particles in the holdup zone and recirculating through the riser, separation zone and transfer line for substantially continuous operation of the combustion, feed injection and adiabatic zones of the gasifier. The recirculating particles preferably comprise char. The gasifier can also include a discharge line for discharging spent solids from the holdup zone and/or the combustion zone.

In a preferred embodiment, the apparatus also comprises a transport combustor having a mixing zone for receiving the spent solids from the discharge line from the transport gasifier apparatus. The transport combustor also includes a combustion riser, a separation zone and a holdup zone. The mixing zone is adapted to mix the spent solids from the discharge line and recirculated solids from the combustor holdup zone with a substoichiometric oxidant supply, and to discharge substoichiometric combustion products into the transport combustion riser. The transport combustion riser has staged oxidant injection points for substantial completion of combustion therein. The combustor separation zone is adapted to recover finely-divided particles from flue gas from the combustion riser to form an essentially particulate-free flue gas. The combustor holdup zone includes a vessel which is adapted to receive particles from the separation zone. The transport combustor can also include a transport solids recirculation line for fluidizing and transferring solids from the transport holdup zone to the transport mixing zone, and an ash discharge chute for discharging ash from the transport combustor. An external steam generation loop can be used, including an external steam generator, and a solids supply line for recirculating solids from the combustor holdup zone, through the steam generator and back to the transport combustor. Steam heating coils are optionally positioned in the combustor holdup vessel.

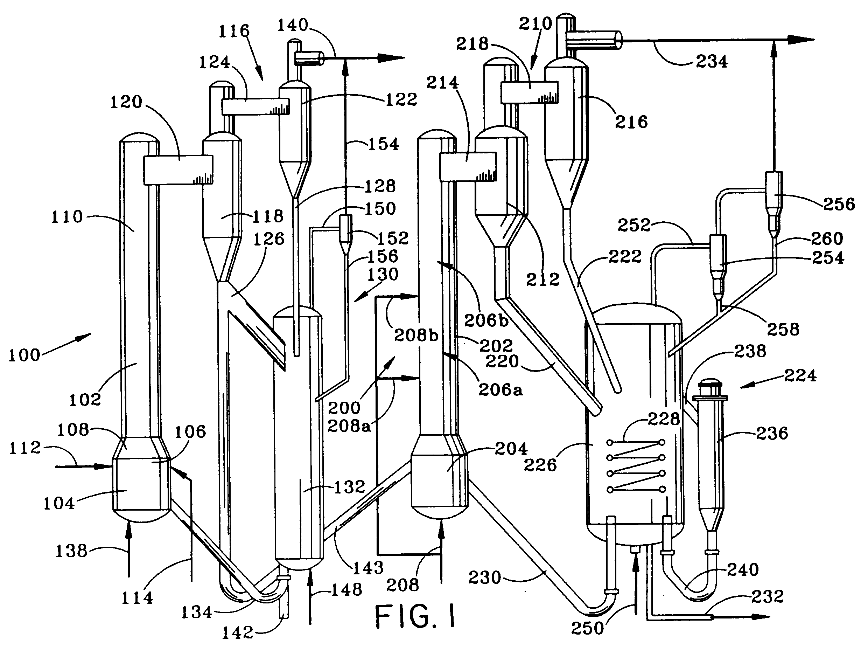

### Brief Description of the Drawing

The Figure is a schematic diagram of a transport gasifier of the present invention in combination with a preferred transport combustor.

### Detailed Description of the Invention

By introducing a volatiles-containing carbonaceous feedstock such as coal to a gasifying zone of a transport gasifier, and avoiding passing the feed into a combustion zone, the gasification process can be fueled by burning recirculating char rather than the volatiles. In such a manner, the volatiles can be conserved to increase the heating value of the fuel gas produced.

Referring to the Figure, a gasifier **100** of the present invention operating in the transport hydrodynamic regime can be employed alone or preferably in combination with a transport combustor **200** to form a hybrid reactor which is more efficient (smaller reactor volume relative to throughput) and produces a fuel gas generally having an enhanced heating value. The present transport gasifier **100** is particularly useful for the gasification of coal or other carbonaceous feed, in the generation of electricity, and can also be used in related processes including, for example, gasification of the feed for syngas production in the synthesis of methanol and/or ammonia, or the like.

As seen in the Figure the transport gasifier **100** comprises a riser **102** above a combustion zone **104**. Char is burned in the combustion zone **104** with a sub-stoichiometric oxidant supply via line **138** to form a high velocity stream of high temperature combustion products which are essentially free of unreacted oxidant. A solids feed injection zone **106** is disposed adjacent riser inlet **108** to an essentially adiabatic reaction zone **110**. In the injection zone **106**, a feed is introduced through line **112** into the high velocity stream. The feed comprises a carbonaceous substrate and an optional sulfur sorbent. Examples of suitable carbonaceous substrates include coal, oil shale, coke, tar, asphalt, hydrocarbon-based polymeric materials such as thermoplastics and rubber, heavy hydrocarbon sludge and bottoms products from petroleum refineries and petrochemical plants, and the like. Examples of suitable sulfur sorbents include limestone and dolomite.

As used herein, reference is made to coal as an exemplary but non-limiting carbonaceous substrate. Similarly, limestone is used as an exemplary but non-limiting sulfur sorbent.

As is well known in the art, raw carbonaceous feed and sulfur sorbent can be prepared by conventional means to facilitate use in the present transport gasifier **100**. For a raw coal and limestone feed, the solids can be dried (if necessary) and pulverized by milling units such as one or more parallel bowl mills (not shown) before use. In the present invention, the carbonaceous substrate and the sulfur sorbent preferably have an average particle size on the order of 50-200 µm. Pulverized coal can be dried to a surface moisture level on the order of 3%, preferably with a side stream of hot exhaust to facilitate handling of a fine powder. Carbonaceous feeds which are liquids at ordinary conditions can be fed directly, or if desired, mixed or slurried with water and/or other solid feed(s).

Appropriately prepared, the solid feed is mixed in suitable proportions and handled using a conventional hopper storage and handling system (not shown). In order to maintain sufficient excess sulfur absorption capacity in the gasifier **100**, a molar ratio of Ca:S in the coal and limestone feeds can be from about 1 to about 2.

Steam is also optionally, but preferably, introduced into the high velocity stream downstream from the combustion zone **104** through line **114**. The weight ratio of steam to carbon feed in line **112** is typically from about 0.1 to about 1, preferably from about 0.3 to about 0.5.

The feed mixture is heated by the combustion products from the combustion zone **104** and passed under reducing conditions through the generally adiabatic reaction zone **110** wherein several gasification processes occur. Volatile hydrocarbons present in the coal feed evaporate. Due to the elevated operating temperature, higher molecular weight hydrocarbon volatiles typically are cracked into lower molecular weight hydrocarbons such as methane and ethane. The devolatilized carbon particles (char) are gasified by reaction with the steam to produce gasification products comprising primarily hydrogen (H₂) and carbon monoxide (CO). In addition, the limestone is calcined. The sulfur (released from the coal) reacts with the gasifier product gases to produce primarily H₂S, but also some carbonyl sulfide (COS). At least a portion of these sulfur compounds are absorbed onto the limestone particles to form calcium sulfide (CaS). Because the cracked hydrocarbons are not consumed by the combustion reaction, the concentrations of methane and ethane in the gasification products leaving the reaction zone **110** are enhanced in comparison to the prior art processes.

The gasification products pass from the riser **102** into a separation zone **116** wherein particles comprising ash, sorbent and char are recovered from the gasification products to give a fuel or synthesis gas essentially free of particulates, usually with a separation efficiency of 99 percent or better. The separation zone **116** preferably comprises one or more high efficiency cyclone separation stages. Particle-laden gas from the riser **102** is initially fed to a primary cyclone **118** through line **120** then to a secondary cyclone **122** through line **124**.

The product gas exits the secondary cyclone **122** through line **140** for further processing, if required, prior to use in a power cycle (not shown), for example. Depending on the degree of limestone utilization, the fuel gas can also contain a varying concentration of H₂S. Downstream processing can include heat recovery, desulfurization, and removal of trace particulates using a suitable separation device (not shown). Examples of additional separation devices include cyclones, ceramic filters, inertial separators, electrostatic precipitators, and the like.

Particles separated from the gasifier products in the primary and secondary cyclones **118**, **122** pass through respective diplegs **126**, **128** into a solids holdup zone **130** comprising, for example, a standpipe **132**. From the standpipe **132**, a primary portion of the recovered particles is recycled to the riser **102** through line **134** to the combustion zone **104**. The mass flow rate of the recirculated particles to the combustion zone **104** in line **134** is preferably from about 10 to about 250 times the mass flow rate of the feed to the injection zone **106** in line **112**.

An oxygen supply is also introduced into the combustion zone **104** through line **138**. The oxygen supply is generally fed at a rate suitable to control the temperature of the combustion zone **104** and the riser **102** and can comprise air, oxygen-enriched air, mixtures of oxygen and inert gas such as nitrogen or argon, pure oxygen, or the like. A molar ratio of oxygen to carbon in the recycled particles is maintained at a substoichiometric proportion to promote the formation of CO over CO₂ in the combustion zone **104**. The oxygen supplied to the combustion zone **104** is preferably less than 5 percent of the stoichiometric amount of oxygen required for complete combustion of all the carbon supplied to the combustion zone **104**.

Spent particles comprising ash, sorbent and char recovered from the gasification products are discharged through line **142** for any further heat recovery (not shown) and processing, as desired, before disposal. Inert (free of oxygen) aeration gas comprising fuel gas, exhaust recycle, nitrogen or the like is introduced to standpipe **132** in line **148**, and as required in other solid transfer lines (not shown). Gas vented from standpipe **132** is passed through line **150**, cyclone separator **152** and line **154** into product gas line **140**. Solids separated from the vent gas in separator **152** are returned to standpipe **132** via dipleg **156**.

Depending on the design operating pressure, the gasifier of the present invention operates at a temperature suitable for promoting the gasification reaction. As is known in the art, the high velocity combustion products induce a rapid internal recirculation flow of solids in the riser **102** which act like a thermal flywheel to efficiently transfer heat from the combustion zone **104**, where the particles are heated by the exothermic combustion reaction, to the reaction zone **110**, where the hot particles from the combustion zone supply heat for the endothermic devolatilization and gasification which occur in the reaction zone **110**.

Gasification can typically commence at a temperature as low as 788^{o}C (1450°F). Preferably, the gasifier operates in a temperature range of from about 840^{o}C (about 1540°F) to about 930^{o}C (about 1710°F), with higher operating temperatures desirable, but not so high as to melt the ash. The operating temperature range is generally controlled by the recirculation rate of the char, optional heat removal from the char in the holdup zone **130**, and oxidant supply to the combustion zone **104**, in a manner analogous to FCC operation. The transport reactor is usually designed to operate at an elevated pressure -- up to about 4.0 MPa (about 600 psig) -- to increase thermal output per unit reactor cross-sectional area and enhance energy output in the subsequent power cycle.

In the hybrid reactor including a combustor **200** in combination with the pneumatic transport gasifier **100**, conversion in the gasifier **100** is preferably 50-80 percent and a second portion of the recovered particles comprising ungasified char and limestone are fed from the holdup zone **130** through line **143** to a combustor where the residual char is burned for heat recovery. While any combustor suitable for burning char can be used, the residual char and absorbent are preferably fed to a transport combustor **200**. In the combustor **200**, unconverted char is burned to complete the chemical energy release. This energy can then be extracted for steam production, and following particulate removal, the combustion (flue) gas can be expanded by conventional means to power a generator.

As seen in the Figure, the preferred transport combustor **200** comprises a transport combustion riser **202** and a mixing zone **204**. The char feed from line **143** is added to the recirculating solids flow in the mixing zone **204** and mixed with an oxidant supply fed to the mixing zone **204** through line **208** for partial combustion. The oxidant supply can be oxygen, air or oxygen-enriched air, or the like. If desired, additional limestone can also be fed (not shown) to the mixing zone **204**. The mixing zone **204** preferably has a larger diameter than the transport riser **202** to enhance gas-solid contact in the mixing zone **204**.

In the transport combustion riser **202**, char is burned with the oxidant to form high temperature combustion products and sulfur is captured by the limestone sorbent as CaSO₄ and/or CaS which is subsequently oxidized to CaSO₄. Char combustion and SO₂ absorption are substantially complete (>99%). In a preferred arrangement, the char is burned in one or more combustion stages **206a**, **206b** using a staged supply of oxygen to limit NOₓ production, substantially as described in U.S. Patent 4,579,070 to Lin et al., which is hereby incorporated herein by reference, preferably at an elevated pressure. Substoichiometric combustion products from the mixing zone **204** pass at a high velocity through combustion stages **206a**, **206b** wherein an additional supply of an approximately stoichiometric amount of oxidant is introduced through respective lines **208a**, **208b** to substantially complete the combustion reaction.

The combustion products pass from the riser **202** into a separation zone **210** wherein finely-divided particles comprising ash, sorbent and any unburned char are separated from the combustion products to give a flue gas essentially free of particulates, usually less than 1 percent particulates by weight. Similar to the gasifier separation zone **116**, the combustor separation zone **210** preferably comprises one or more high efficiency cyclone separation stages. Combustion products from the riser **202** are fed through line **214** to a primary cyclone **212**, and then through line **218** to the secondary cyclone **216**. Separated particles in the cyclones **212**, **216** pass through respective diplegs **220**, **222** into a solids holdup zone **224** including a holdup vessel **226** for recycle to the transport combustion riser **202**. Typically, the amount of solids recirculated can be 50-750 times the mass flowrate of the feed in line **143**, more typically about 200 times.

Ash collecting on the bottom of the riser **202** and/or holdup vessel **226** is discharged therefrom through a chute **232** for further heat extraction (not shown) and disposal. An essentially particulate-free flue gas is removed from the secondary cyclone **216** through line **234** for heat extraction (not shown) in the power cycle. Gas vented from the holdup vessel **226** is passed through line **252**, to cyclone separators **254** and **256** in series, and to flue gas line **234**. Solids recovered in separators **254** and **256** are returned to holdup vessel **226** via respective diplegs **258** and **260**.

Operation of the transport combustor **200** requires the use of heat removal equipment to avoid excessive operating temperature in the riser **202**. This is typically accomplished by cooling the solids recycle flow, preferably in one or more external bayonet type boilers **236** to generate steam. Temperature control flexibility is also facilitated since the feedwater supplied to the boilers **236** can be varied to obtain the desired degree of cooling, and the boilers **236** can be taken out or put into service depending on overall operating conditions. Solids enter the boiler **236** through line **238** for heat exchange with boiler feedwater flowing through internal tubes (not shown). The solids pass from the boiler **236** through line **240** and back to the holdup vessel **226**, or if desired, the line **240** can feed directly to the mixing zone **204**. Hot solids are also preferably cooled in the holdup vessel **226** by an exchange of heat with steam and/or boiler feed water flowing tube-side through coils **228** disposed in the solids holdup vessel **226**. Superheated steam thus formed can be used in the power cycle.

The cooled particles are recycled to the mixing zone **204** through line **230** for mixing into the internal recirculation flow. By setting a suitable solids recycle rate, usually 100 up to about 750 times the feed flow rate, more typically about 200-250 times, the temperature in the transport combustion riser **202** can be controlled in a range of from about 815^{o}C (approximately 1500^{o}F) to about 925^{o}c (approximately 1700^{o}F). The recycle rate can be adjusted by conventional means, such as increasing the solids level in the holdup zone **224**, or varying the amount of fluidizing aeration gas (preferably air) introduced through line **250** and into the solid transfer lines (not shown). Within limits, the temperature drop of the solids can be established at any desired value. Generally, the solids temperature drop (ΔT) is between about 25^{o}C (about 45^{o}F) and about 85^{o}C (about 150^{o}F).

In the present gasifier **100** the initial design flow conditions set the relative elevations of the various component vessels and establish the design pressure balance. During operation, solid flows can be adjusted by specifying the solids height in the equipment through the use of plug valves (not shown) and more commonly aeration gas (not shown) to fluidize the solids and effect density changes, similar to the manner in which FCC units are operated. The aeration gas can be air, recycled flue gas, nitrogen, or the like. Care should be exercised to avoid using air or other oxygen-containing gases for flammable solids fluidization to avoid explosive mixtures, as is well known, but the solids recirculated in the transport combustor **200** are generally free of carbon, and thus, are not flammable.

In a preferred embodiment of the present hybrid reactor, sulfided sorbent produced in the gasifier **100** (CaS) is oxidized to sulfate (CaSO₄) in the combustor **200**, substantially as described in commonly assigned copending application U.S. Ser. No. 08/090,420 filed of even date herewith by G. Henningsen, S. Katta, G.K. Mathur and W.M. Campbell for Coal Gasification and Sulfur Removal Process which is hereby incorporated herein by reference. Briefly, sulfur not absorbed *in situ* in the gasifier **100** is recovered downstream from the product gas using a metallic sorbent (not shown), released into metallic sorbent regeneration offgas, and directed to the combustor **200** with the combustor oxidant supply. Raw product gas in line **140** comprising sulfides can be desulfurized downstream using a variety of processes including "cold" or "wet" chemical absorption. However, the raw H₂S-containing gas is preferably desulfurized while hot by absorption on a metallic sorbent in one or more reactors (not shown) which can be fixed bed, fluid bed, moving bed, bubbling bed, turbulent bed, transport or like reactors. Typically three fixed bed reactors will be employed so that two reactors are operating in series while a third reactor regenerates. With three reactors, the regeneration mode can take place under optimum sulfur absorption conditions for both the absorbent bed reactors and the combustor **200**, i.e. a fairly steady supply of sulfur to the combustor **200**. Design basis is preferably less than 30 ppm H₂S in the desulfurized product gas. The metallic sorbent preferably comprises a zinc oxide-based sorbent. During the metallic sorbent regeneration, the absorbed sulfides are oxidized and stripped using an air/steam gas mixture. This regeneration offgas can be combined with the combustor oxidant supply in lines **208**, **208a** and/or **208b**, or alternatively to the gasifier oxidant supply in line **138**.

Product gas in line **140** can be used in a power cycle (not shown) employing conventional equipment and techniques. The power cycle can include turbines fired with the fuel gas from the gasifier **100**; turbines powered by expanding pressurized flue gas; steam turbines wherein the steam is generated by recovering heat from flue gas and/or recirculating solids in the combustor **200**; or the like.

The present invention can be further illustrated by reference to the following examples.

### Example

A transport gasifier according to the present invention similar to the reactor **100** of the Figure is used to gasify a bituminous coal feed. The coal feed inlet is high above the combustion zone to preserve volatile components. An approximate analysis of the coal is given in Table 1.

**TABLE 1**

| COMPONENT | WEIGHT % |
|---|---|
| Ash | 8-12 |
| Moisture | 5-6 |
| Volatiles | 37-41 |
| ixed Carbo | 45-46 |

| ELEMENT | |
|---|---|
| C | 65-66 |
| H | 4-5 |
| S | 1-3 |
| N | 1-2 |
| O | 8-15 |

Basis for the gasifier operation is given in Table 2.

**TABLE 2**

| Stream | Flowrate kg/hr (lb/hr) |
|---|---|
| Feed Coal | 1,800 (4,000) |
| Feed Limestone | 350 (780) |
| Inlet Air | 6,500 (14,400) |
| Steam | 640 (1400) |
| Recycle Solids | 90,000 (200,000) |
| Fuel Gas | 8,000 (17,700) |
| Solid Waste | 500 (1,120) |

Breakdown of the gasifier output is given in Table 3.

**TABLE 3**

| Process Step | Output kg/hr (lb/hr) | |
|---|---|---|
| | Example | Comparative Example |
| Steam Gasification | 100 (219) | 452 (994) |
| Devolatilization | 353 (776) | - |
| Substoichiometric Combustion | 679 (1494) | 679 (1494) |

### Comparative Example

A prior art KRW Energy Systems fluidized bed (bubbling bed) gasifier with coal feed at the bottom of the bubbling bed is operated similarly to the transport gasifier **100** of the present invention outlined in the Example above. A comparison breakdown of the fluidized bed gasifier output includes no component due to devolatilization (see Table 3). In addition, with the same coal throughput, the bubbling bed reactor is substantially larger, or multiple reactors are required. Thus, the transport gasifier of the present invention is comparatively more economical. The heating value of the resulting bubbling bed fuel gas is also generally lower than the fuel gas produced by the transport gasifier of the present invention.

The present transport gasifier reactor and methodology are illustrated by way of the foregoing description and examples. The foregoing description is intended as a non-limiting illustration, since many variations will become apparent to those skilled in the art in view thereof. It is intended that all such variations within the scope and spirit of the appended claims be embraced thereby.

## Claims

1. A method for gasifying a carbonaceous substrate, comprising the steps of:
(a) introducing a carbonaceous feed into a stream of substoichiometric combustion products;
(b) passing the resulting mixture from step (a) through an essentially adiabatic riser under transport conditions to devolatilize and gasify the substrate;
(c) recovering finely divided particles from the gasification products of step (b) to obtain a fuel gas essentially free of particulates; and
(d) supplying a primary portion of the recovered particles and a substoichiometric amount of reactive oxygen to a combustion zone to form the stream of combustion products for the feed introduction step (a).

2. The method of claim 1, wherein the substrate comprises oil shale, tar, asphalt, thermoplastics, rubber, or heavy hydrocarbon sludge or bottoms products.

3. The method of claim 1, wherein the substrate comprises coal.

4. The method of claim 1, wherein the substrate contains sulfur, and the feed in step (a) includes a sulfur sorbent.

5. The method of claim 1, wherein the particles are supplied to the combustion zone in step (d) at a rate from about 10 to about 250 times the mass flow rate of the substrate feed in step (a).

6. The method of claim 1, wherein air is fed to the combustion zone at a rate to supply said substoichiometric amount of oxygen in step (d).

7. The method of claim 1, wherein reactive oxygen is supplied to the combustion zone in step (d) in an amount less than about 5 percent of stoichiometric relative to carbon in the particles supplied to the combustion zone.

8. The method of claim 1, comprising feeding a second portion of the recovered particles to a secondary combustion zone, and extracting heat from the secondary combustion products.

9. The method of claim 1, wherein the recovered particles comprise char and sulfur sorbent.

10. The method of claim 1, wherein the recovered particles comprise essentially inert particles with a deposition of carbon compounds thereon.

11. The method of claim 1, further comprising: supplying steam to the substoichiometric combustion products for gasification of the substrate in the presence thereof in step (b).

12. A method for gasifying coal, comprising the steps of:
(a) introducing coal and sulfur sorbent particles, optionally with steam, into substoichiometric combustion products containing carbon monoxide and essentially free of molecular oxygen;
(b) passing the resulting mixture from step (a) through an essentially adiabatic riser in a high velocity stream under transport conditions to devolatilize and gasify the coal particles to form residual char particles, and to absorb sulfur compounds onto the sorbent particles;
(c) recovering the char and sorbent particles from the gasification products from step (b) to obtain a fuel gas essentially free of particulates;
(d) supplying oxygen and a first portion of the recovered char and sorbent particles to a substoichiometric combustion zone, wherein the first portion of the recovered particles comprises from 10 to 250 times the mass flow rate of the feed, and wherein the oxygen is supplied at less than about 5 percent of stoichiometric relative to the first portion of the char particles.

13. The method of claim 12, comprising the further steps of:
(e) feeding a second portion of the recovered char and sorbent particles from step (c) to a mixing zone of a transport combustor supplied with recycled particles and a substoichiometric source of oxygen;
(f) passing the mixture from step (e) through a transport combustion riser and introducing an additional supply of oxygen in one or more stages into the transport combustion riser for substantially complete combustion therein;
(g) recovering finely divided particles from the combustion products from step (f) to obtain a flue gas essentially free of particulates;
(h) recirculating the particles recovered from the transport combustion products in step (g) to the mixing zone in step (e);
(i) recovering heat from the flue gas; and
(j) recovering heat from the particles recovered from the transport combustion products in step (g).

14. The method of claim 13, comprising the further steps of:
(k) receiving the particles recovered in step (g) in a holdup vessel;
(l) recovering heat from an external heat exchanger through which particles from the holdup vessel are circulated at a controllable rate.

15. The method of claim 14, comprising the further step of:
(m) recovering heat from coils positioned in the holdup vessel.

16. Apparatus for gasification of a carbonaceous substrate, comprising a transport gasifier including:
a combustion zone adapted for burning particles including char with a substoichiometric oxidant supply to form a stream of combustion products essentially free of reactive oxidant;
a feed injection zone adjacent a riser inlet adapted for continuously introducing a carbonaceous feed into the stream of combustion products to form a mixture of the feed and the combustion products;
a riser adapted for receiving the mixture from the feed injection zone, the riser including an essentially adiabatic zone for devolatilization and gasification;
a separation zone for receiving the gasification products from the riser and recovering finely divided particles therefrom to form a gas product essentially free of particulates;
a solids holdup zone for receiving the recovered particles including char;
a transfer line for conveying particles from the holdup zone to the combustion zone; and
a charge of particles including char in the solids holdup zone and recirculating through the riser, separation zone and transfer line in an amount sufficient to sustain substantially continuous operation of the combustion, feed injection and adiabatic zones.

17. The apparatus of claim 16, further comprising:
a gasifier discharge line for transferring spent solids from the gasifier holdup zone to a transport combustor;
wherein the transport combustor comprises a mixing zone, a transport combustion riser, a separation zone and a holdup zone;
wherein the combustor mixing zone is adapted to mix the spent solids from the gasifier discharge line and recirculated solids from the combustor holdup zone with a substoichiometric oxidant supply;
wherein the transport combustion riser is adapted to receive the mixture from the mixing zone, and has staged oxidant injection points for substantial completion of combustion therein;
wherein the combustor separation zone is adapted to disengage entrained particles from flue gas from the transport combustion riser to form an essentially particulate-free flue gas;
wherein the combustor holdup zone includes a vessel adapted to receive the particles from the combustor separation zone;
a heat exchanger adapted for transferring heat from the combustor holdup zone;
a solids recirculation line for transferring solids from the combustor holdup zone to the mixing zone; and
an ash discharge chute for discharging ash from the transport combustor.

18. The apparatus of claim 17, comprising an external steam generation loop including an external steam generator, and a solids supply line for recirculating solids from the holdup vessel, through the steam generator and back to the transport combustor.

19. The apparatus of claim 18, comprising internal steam heating coils positioned in the combustor holdup zone.
